# EUROPÄISCHE PATENTSCHRIFT

(11) **EP 0 586 797 B1**
(45) Veröffentlichungstag und Bekanntmachung des Hinweises auf die Patenterteilung: **08.10.1997**
(21) Anmeldenummer: 93109242.3
(22) Anmeldetag: 09.06.1993
(51) Int. Cl.: C03C 13/06

(54) **Anorganische Faser**
Inorganic fibre
Fibre inorganique

(30) Priorität: 26.08.1992 DE 4228353
(43) Veröffentlichungstag der Anmeldung: 16.03.1994
(73) Patentinhaber: DIDIER-WERKE AG, 65189 Wiesbaden (DE)
(72) Erfinder: Eschner, Axel, Dr., D-6200 Wiesbaden (DE)
(74) Vertreter: Brückner, Raimund, Dipl.-Ing.

(56) Entgegenhaltungen:
- EP-A- 0 016 369
- WO-A-92/09536
- FR-A- 2 118 026
- MATERIALS LETTERS Bd. 11, Nr. 8-9 , Juli 1991 , AMSTERDAM,NL Seiten 229 - 235 XP216780 F.T.WALLENBERGER ET AL. 'CALCIUM ALUMINATE GLASS FIBERS......'

## Beschreibung

Die Erfindung betrifft anorganische Fasern.

Keramische Fasern des Standes der Technik aus dem System Al₂O₃-SiO₂ mit 40 - 75 Gew.-% Al₂O₃ mit nicht mehr als 2 Gew.-% Alkali- und Erdalkalioxid sind röntgenamorph, und vorbekannte Fasern mit 80 - 95 Gew.-% Al₂O₃, Rest SiO₂, sind kristallin. Solche Fasern werden zur Wärmeisolation bei erhöhten Temperaturen in Form von Matten und faserhaltigen Formkörpern, sowie zur Herstellung von verstärkten keramischen oder metallischen Formkörpern verwendet. Die vorbekannten keramischen Fasern haben eine hohe Beständigkeit gegen Wasser, d.h. sie lösen sich in Wasser oder in physiologischen Lösungen nicht oder nur nach sehr langer Zeit. Bei Temperaturanwendung kristallieren die Fasern aus oder zeigen im Fall der bei Anlieferung bereits kristallinen Fasern ein weiteres Kristallwachstum. Der Habitus der Faser, charakterisiert durch das Längen-Durchmesser-Verhältnis, bleibt in allen Fällen erhalten. Dazu kommt, daß in der Anlieferung röntgenamorphe Fasern auf Grund ihres hohen Anteils an SiO₂ bei Temperaturanwendung Cristobalit bilden, der Silikose verursacht.

Ferner besteht die Vermutung, daß keramische Fasern krebsauslösend sein könnten, wofür als wesentlicher Grund ihre Beständigkeit gegen Lösung in Wasser bzw. in Körperflüssigkeit gesehen wird. Sie bleiben als feinfaserige Fremdkörper ähnlich wie Asbestfasern im Körper erhalten und könnten zu Reizungen führen. Aus "Keramik und Glas", Mitteilungen der Berufsgenossenschaff der Keramischen und Glas-Industrie, März 1992, Nr.1, S. 30 - 41, insbesondere Seite 38 - 40, sind Werte für die sogenannte "Netzwerkauflösegeschwindigkeit" und die Verweildauer von verschiedenen Fasern in Flüssigkeit bekannt.

Bei anorganischen Fasern auf der Basis von im wesentlichen SiO₂, Al₂O₃ und Erdalkalioxiden wird nach der EP 0 459 897 A1 durch den Zusatz von P₂O₅ eine modifizierte Faser erhalten, die sich in Berührung mit einem physiologischen Milieu zersetzen soll. Die Fasern haben einen wesentlichen Anteil an SiO₂ und können bis etwa 700°C eingesetzt werden.

Aus der FR-A-2 118 026 ist eine kontinuierliche Glas-Metalloxid-Faser mit einem nicht höheren SiO₂-Gehalt als 20 Gew.-% bekannt. Die entsprechenden Fasern werden mittels eines 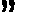 Filmstabilisierungsverfahrens 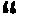 hergestellt und haben einen Durchmesser von ungefähr 25,4 µm oder größer.

Nach 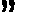 Materials Letters, Bd. 11, Nr. 8-9, Juli 1991, Amsterdam NL, Seiten 229-235, XP216780 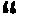 können bei Calciumaluminat-Schmelzen mit 35 bis 50 Gew.-% Al₂O₃ durch Ziehen Fasern hergestellt werden, die einen geringen Durchmesser haben (7 - 20 µm). Dagegen sollen sich bei Schmelzen mit über 50 Gew.-% Al₂O₃ wegen der niedrigen Viskosität durch Ziehen keine Fasern herstellen lassen. Um nun Fasern aus Zusammensetzungen mit 50 bis 80 % Aluminiumoxid herzustellen, wird die Schmelze mit der geringen Viskosität unter Druck durch eine Düsenöffnung als dünner Strahl in einen Raum mit Propangas gefördert. Durch dieses als 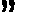 inviscid melt spinning 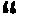 bezeichnete Verfahren werden Fasern mit sehr großem Durchmesser von z.B. mindestens 100 µm erhalten.

Aufgabe der Erfindung ist eine anorganische Faser und deren Herstellung, die möglichst SiO₂-frei ist, sich in ihren thermischen und mechanischen Eigenschaften nicht wesentlich von den Fasern aus dem System Al₂O₃-SiO₂ unterscheidet, aber in Anwesenheit von Wasser oder Körperflüssigkeiten, z.B. auf der Haut oder nach dem Einatmen in die Lunge, schnell zerfällt und ihre Faserstruktur vollständig verliert, so daß sie aufgrund ihres Habitus als Faser keine gesundheitsschädliche Wirkungen ausüben kann.

Zur Lösung der Aufgabe dient die anorganische Faser, welche dadurch gekennzeichnet ist, daß sie zu wenigstens 90 % aus 20 - 50 Gew.-% CaO und 50 - 80 Gew.-% Al₂O₃ und einem Rest von maximal 10 Gew.-% üblicher verunreinigender Oxide einschließlich 0 - 1,5 Gew.-% SiO₂, vorzugsweise 0 - 0,8 Gew.-% SiO₂ besteht, wobei die Faser einen maximalen Durchmessern von 10 µm aufweist. Die anorganische Faser mit erhöhtem Gehalt an Calciumoxid ist nach CEN (Comité Européen de Normalisation) Dokument CEN/TC 187/WG3/N27, Januar 1992, nicht als keramische Faser zu bezeichnen, da diese weniger als 2 Gew.-% Alkali- und Erdalkalioxide enthalten.

Die Erfindung betrifft weiter die Herstellung und die Verwendung der erfindungsgemäßen Fasern.

Der Zusammensetzung der Fasern zu wenigstens 90 % aus 20 - 50 Gew.-% CaO und 50 - 80 Gew.-% Al₂O₃ liegt im wesentlichen das System CaO-Al₂O₃ zugrunde. Die Zusammensetzung der Fasern ist so gewählt, daß sie den Calcium-Aluminatzementen entspricht.

Bei der Herstellung der erfindungsgemäßen Fasern können die üblichen Ausgangsstoffe wie bei der Herstellung von Calcium-Aluminatzementen verwendet werden. Ferner können übliche, in geringer Menge zuzusetzende Hilfsstoffe, z.B. Gips (CaSO₄ · 2 H₂O) oder Anhydrid (CaSO₄) eingesetzt werden.

Übliche oxidische Verunreinigungen in solchen Calcium-Aluminatzementen sind MgO, TiO₂, Eisenoxid und SiO₂, die daher auch in den erfindungsgemäßen Fasern vorliegen können. Ihre Gesamtmenge sollte jedoch maximal 10 Gew.-%, bezogen auf die Gesamtzusammensetzung der Fasern, und insbesondere 5 Gew.-% nicht übersteigen.

Die Fasern können nach den bekannten Methoden zur Herstellung von mineralischen Fasern hergestellt werden, z.B. durch Verblasen oder Schleuderverfahren.

Die aus der dünnflüssigen Schmelze der Ausgangsstoffe, insbesondere durch Verblasen, erzeugten Fasern gemäß der Erfindung sind weitgehend röntgenamorph, sie hydratisieren und zerfallen bei Kontakt mit Wasser unter Verlust ihrer Fasergestalt.

Die erfindungsgemäßen Fasern haben übliche Abmessungen, vorzugsweise einen Durchmesser von 1 bis 5 µm und einen mittleren Durchmesser von 3 µm, sowie eine Länge von > 20 µm.

Es zeigt sich in überraschender Weise, daß derartige Fasern in Wasser bereits nach wenigen Tagen hydratisieren und beginnen, ihre Faserform zu verlieren.

Die anorganische Faser gemäß der Erfindung zersetzt sich fortschreitend in Gegenwart von Wasser bzw. Körperflüssigkeit durch Hydratation und verliert die Faserstruktur mit zunehmender Hydratation und ist somit auf Grund ihres Habitus als Faser nach relativ kurzer Zeitspanne eines Wasserkontaktes nicht mehr gesundheitsgefährlich. Dies ist vorteilhaft sowohl bei der Anlieferung und Verarbeitung oder dem Einbau der Fasern bei hieraus bestehenden Formteilen als auch beim Ausbruch von Faserzustellungen, insbesondere in Industrieöfen, und bei der Deponie eines solchen Abbruchmaterials. Wird z.B. eine Ofenpartie aus einem anorganischen Faserprodukt gemäß der Erfindung beim Ausbruch mit Wasser abgespritzt, so hydratisieren die Fasern und nach einigen Tagen können sie als formlose, faserfreie Masse entfernt werden. Diese Masse kann wie ein tonerdereicher Ausbruch entsorgt und recycled werden.

Auch bei einem Einatmen von Fasern zerfallen diese innerhalb längstens weniger Tage, so daß keine Silikosegefährdung zu befürchten ist.

Die anorganischen Fasern gemäß der Erfindung, die im Kontakt mit Wasser ihre Faserform verlieren, stellen daher gegenüber den bisher bekannten keramischen Fasern ein weniger gesundheitsschädliches Produkt dar.

Die anorganische Faser, deren Herstellung und Verwendung wird durch die folgenden Beispiele und unter Bezugnahme auf die in der Zeichnung dargestellten Mikrofotografien näher erläutert.

### Beispiel 1

Eine Mischung aus 50 Gew.-% Tonerde und 50 Gew.-% calciniertem Kalk wurde zu Pellets verpreßt. Die Pellets wurden in einem Ofen bei 1650°C geschmolzen, und die Schmelze wurde mit Preßluft verblasen.

Dabei wurden Fasern mit einem Durchmesser von bis zu 8 µm und einem mittleren Faserdurchmesser von 3 µm erhalten. Diese Fasern zeigten bei der Lagerung in Wasser bereits nach 4 Stunden eine beginnende Hydratation und nach 2 Tagen waren die Fasern weitgehendst zerfallen. An der getrockneten Probe der 2 Tage in Wasser gelagerten Fasern konnten bei der Untersuchung im Rasterelektronenmikroskop (REM) keine Fasern mehr nachgewiesen werden.

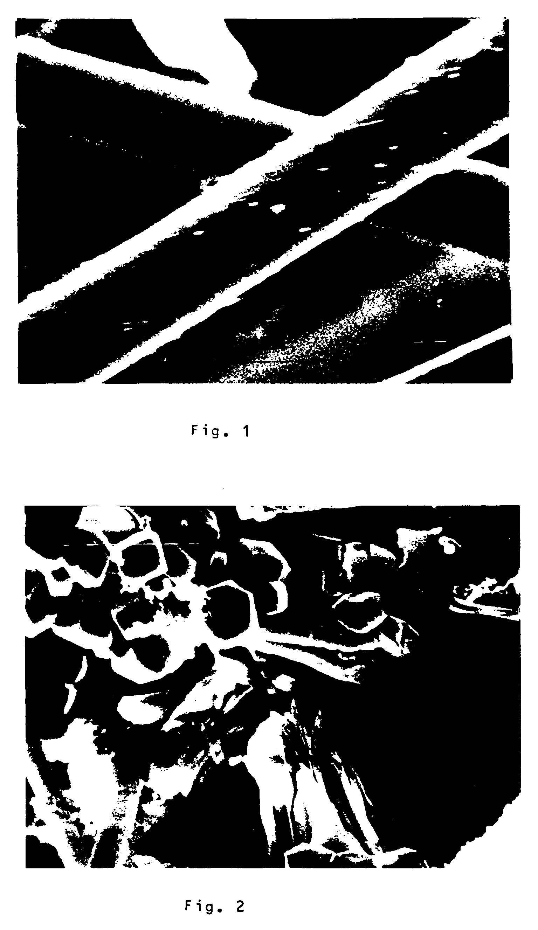

Die Fig. 1 zeigt eine Fotografie der REM-Aufnahme von Fasern nach ihrer Herstellung bei einer Vergrößeruug von x 2100.

In der Fig. 2 ist eine REM-Aufnahme von 2 Tage in Wasser aufbewahrten Fasern bei einer Vergrößerung von x 2000 gezeigt.

Aus dem Vergleich dieser beiden Fotografien ist eindeutig ersichtlich, daß die Fasern nach der Lagerung in Wasser während 2 Tagen ihre Faserstruktur bzw. ihren Faserhabitus fast vollständig verloren hatten.

### Beispiel 2

Fasern einer anderen Ausgangsmischung mit 63 Gew.-% Tonerde, 30 Gew.-% calciniertem Kalk, 5 Gew.-% Calciumsulfat und 2 Gew.-% verunreinigenden Oxiden (Fe₂O₃, MgO, SiO₂) führten zu einem ähnlichen Ergebnis wie die zuvor beschriebenen Fasern der Mischung mit 50 Gew.-% Tonerde und 50 Gew.-% calciniertem Kalk. Bei der Herstellung wurde die Ausgangsmischung wie im Beispiel 1 bei 1650°C aufgeschmolzen und zu Fasern verblasen.

### Beispiel 3

Nach in an sich bekannter Weise wurden die Fasern nach Beispiel 2 in Wasser suspendiert und nach Zugabe von Stärke als temporärem Bindemittel nach dem Vakuumsaugverfahren zu Faserkörpern geformt. Die erhaltenen Formkörper zeigten ähnliche Eigenschaften wie die der bekannten Faserformkörper auf der Grundlage der keramischen Fasern des Systems Al₂O₃-SiO₂. Die Fasern waren weitgehend in ihren Abmessungen in dem hergestellten Formkörper unverändert. Ein durch Brennen bei 1000°C vorbehandelter Faserkörper wurde in Wasser gelagert. Nach 2 Tagen war der Faserkörper zu einer formlosen Masse zerfallen, in der kaum Fasern mehr nachgewiesen werden konnten.

Aus den erfindungsgemäßen Fasern können durch Vernadeln in an sich bekannter Weise auch sogenannte Faserblankets hergestellt werden.

### Beispiel 4

Dieses Beispiel zeigt eine vorteilhafte Verwendung der erfindungsgemäßen Fasern zur Herstellung von sogenannten feuerfesten Leichtformkörpern in Form von sogenannten Faserbaukörpern.

Fasern gemäß der Erfindung, hergestellt aus der Mischung mit 50 Gew.-% Tonerde und 50 Gew.-% calciniertem Kalk, geschmolzen und verblasen bei 1650°C, wurden zur Herstellung von Faserbaukörpern verwendet. Aus 70 Gew.-% Fasern und 30 Gew.-% Wasser wurde eine Formmasse hergestellt, die bei einem Preßdruck von 1 N/m² zu Formkörper (Platten) verdichtet wurde. Die Formkörper wurden bei 25°C, 100 % Luftfeuchtigkeit, über 24 Stunden gelagert, wobei die Fasern weitgehend hydratisierten und hierdurch eine hydraulische Abbindung erfolgte. Es wurde so eine Leichtbauplatte erhalten, in der die Fasern weitgehend zerfallen waren, die aber eine hohe Porosität bei gleichzeitiger hoher mechanischer Festigkeit und ausgezeichneten Feuerfesteigenschaften aufwies. Beim anschließenden Brand bei 1000°C erwiesen sich die Formkörper als formbeständig.Die Untersuchung im Rasterelektronenmikroskop konnte nur noch wenige Faserreste nachweisen.

Aus anorganischen Fasern (Durchmesser < 10 µm; mittlerer Faserdurchmesser 3 µm) gemäß der Erfindung und Wasser hergestellte und zu Formkörpern verformte Massen verfestigen bereits nach etwa einem Tag. Nach der Verfestigung und Trocknung weisen die Formkörper trotz der makroskopisch verlorengegangenen Faserstruktur eine ausgezeichnete Festigkeit und hohe Wärmedämmung auf.

## Patentansprüche

1. Anorganische Faser,
dadurch gekennzeichnet, daß
die Faser zu wenigstens 90% aus 20-50 Gew.% CaO und 50-80 Gew.% Al₂O₃ und einem Rest vom maximal 10 Gew.% üblicher verunreinigender Oxide einschließlich 0-1,5 Gew.% SiO₂, vorzugsweise 0-0,8 Gew.% SiO₂ besteht, wobei die Faser einen maximalen Durchmesser von 10 µm aufweist.

2. Anorganische Faser nach Anspruch 1, dadurch gekennzeichnet, daß
die Maximalmenge der üblichen verunreinigenden Oxide maximal 5 Gew.% beträgt.

3. Anorganische Faser nach Anspruch 1,
dadurch gekennzeichnet, daß
die Faser zu wenigstens 60% röntgenamorph ist.

4. Verfahren zu Gerstellung der Faser nach Anspruch 1 durch Schmelzen einer oxidischen Zusammensetzung und Verarbeitung zu Fasern in bekannter Weise,
dadurch gekennzeichnet, daß
eine Mischung aus Tonerde und calciniertem Kalk mit einer solchen Zusammensetzung eingesetzt wird, daß die Faser zu wenigstens 90% aus 20-50 Gew.% CaO und 50-80 Gew,% Al₂O₃ und einem Rest von maximal 10 Gew.% üblicher verunreinigender Oxide besteht.

5. Verwendung der Faser nach Anspruch 1 zur Herstellung von wärmeisolierenden Fasermatten, Faserformkörpern oder Faserbaukörpern.

6. Verwendung der Faser nach Anspruch 1 zur Herstellung von Dichtungen und Fugenfüllungen bei keramischen Formkörpern.

7. Verwendung der Faser nach Anspruch 1 zur Verstärkung von keramischen oder metallischen Formkörpern.

## Claims

1. Inorganic fibre characterised in that the fibre comprises to an extent of at least 90% 20-50 wt.% CaO and 50-80 wt.% Al₂O₃ and a remainder of at most 10 wt.% conventional contaminating oxides including 0-1.5 wt.% SiO₂, preferably 0-0.8 wt.% SiO₂, the fibre having a maximum diameter of 10 µm.

2. Inorganic fibre as claimed in Claim 1, characterised in that the maximum amount of the conventional contaminating oxides is at most 5 wt.%.

3. Inorganic fibre as claimed in Claim 1, characterised in that the fibre is at least 60% X-ray amorphous.

4. Method of manufacturing the fibre as claimed in Claim 1 by melting an oxide composition and processing into fibres in a known manner, characterised in that a mixture of alumina and calcined lime is used with such a composition that the fibre comprises to an extent of at least 90% 20-50 wt.% CaO and 50-80 wt.% Al₂O₃ and a remainder of at most 10 wt.% conventional contaminating oxides.

5. Use of the fibre as claimed in Claim 1 for manufacturing heat insulating fibrous mats, fibrous moulded bodies or fibrous constructional bodies.

6. Use of the fibre as claimed in Claim 1 for manufacturing seals and joint fillings with ceramic moulded bodies.

7. Use of the fibre as claimed in Claim 1 for reinforcing ceramic or metallic moulded bodies.

## Revendications

1. Fibre minérale caractérisée en ce que la fibre est composée pour au moins 90 %, de CaO à raison de 20 - 50 % en poids et d'Al₂O₃ à raison de 50 - 80 % en poids, et d'une partie complémentaire, au plus égale à 10 % en poids, constituée d'impuretés habituelles de type oxydes, y compris de 0 à 1,5 % en poids de SiO₂, de préférence de 0 à 0,8 % en poids de SiO₂, la fibre ayant un diamètre qui est au plus égal à 10 µm.

2. Fibre minérale conforme à la revendication 1, caractérisée en ce que la partie complémentaire constituée d'impuretés habituelles de type oxydes est au plus égale à 5 % en poids.

3. Fibre minérale conforme à la revendication 1, caractérisée en ce qu'au moins 60 % de la libre sont amorphes aux rayons X.

4. Procédé de fabrication de la fibre conforme à la revendication 1 par fusion d'une composition d'oxydes, suivie de la transformation en fibres d'une manière connue, caractérisé en ce que l'on utilise un mélange d'alumine et de chaux calcinée en des proportions telles la fibre soit composée pour au moins 90 %, de CaO à raison de 20 - 50 % en poids et d'Al₂O₃ à raison de 50 - 80 % en poids, et d'une partie complémentaire, au plus égale à 10 % en poids, constituée d'impuretés habituelles de type oxydes.

5. Utilisation de la fibre conforme à la revendication 1 pour la fabrication de pièces moulées ou d'éléments de construction contenant des fibres et de mats de fibres pour l'isolation thermique.

6. Utilisation de la fibre conforme à la revendication 1 pour la préparation de joints ou de pâtes d'étanchéité pour joints pour des pièces moulées céramiques.

7. Utilisation de la fibre conforme à la revendication 1 pour le renforcement de pièces moulées céramiques ou métalliques.
